# EUROPEAN PATENT APPLICATION

(11) **EP 2 989 941 A1**
(43) Date of publication of application: **02.03.2016**
(21) Application number: 14183076.0
(22) Date of filing: 01.09.2014
(51) Int. Cl.: A47J 31/06, A47J 31/18, A47J 31/44, A47J 31/52, A47J 31/04

(54) **Compact tea brewing appliance**

(71) Applicant: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(57) **Abstract**

An electrically heated automatic compact tea brewing appliance (100) comprising a liquid receptacle (1) having a top opening (10), a bottom (12), and a minimum liquid loading level defined with a minimum distance (d) from the bottom (12); a leaf receptacle (2) having a first opening (21) for receiving leaves and liquids, a second opening (22) provided with a filter (222) for supporting leaves and letting liquids through, which remains on the distal end of the leaf receptacle with regard to the first opening (21), a lid (11) for covering the first opening (22), and a first circumferential wall (23) circumferentially encompassing said filter (222); an extract channel (3) having an extract inlet (31) for receiving extract from the second opening (22), an extract outlet (32) which remains on the distal end of the extract channel with regard to the first opening (31), and a second circumferential wall (33) defining a path for extract flow through the extract channel; and a fluid circulating line (4) provided with a pump and a pipeline (40) in connection with a pipe exit (41), for transferring liquid from the bottom (12) of the liquid receptacle (1) and pouring it over the leaf receptacle (2) through the pipe exit (41), wherein the first and second circumferential walls (23, 33) are impermeable for liquids and gases; the lid (11) is sealable to the first opening (21) such that, in use, a first volume (v1) is defined between said filter (222), first circumferential wall (23) and lid (11), wherein gas transfer from said first volume (v1) through the top opening (10) is prevented; and in use, the extract outlet (32) remains within said minimum distance from the bottom (12) such that the extract outlet (32) remains submerged in liquid and gas transfer through the extract outlet (32) is prevented.

## Description

### Technical Field of the Invention

The present invention relates to a compact tea brewing appliance providing extraction with minimized loss of aroma substances.

### Background of the Invention

Tea brewing can be considered as a daily example for liquid/solid extraction processes. During said process, numerous substances are transferred from the solid phase (leaves) to the liquid phase (water). People usually brew and drink tea for personal pleasure, and flavorous aroma substances in the extracted liquid is seeked for a satisfactory savour.

Yet, said substances have usually high vapor pressures and leave the liquid phase easily by desorption into gas phase in contact with said liquid phase. The tea brewing appliances in the market are prone to lose said aroma substances whilst and upon brewing, to the atmosphere; since a remarkable desorption and loss of flavor substances occur in said appliances. Therefore, such appliances are not suitable for obtaining tea (or herbal tea) extracts with high flavor.

It is also worth taking into consideration that prolonged extraction of tea cause over-brewing, wherein remarkable concentrations of undesired substances can be observed in the extract, in which case the extract is unpleasant to consume.

The tea brewing process takes time, which is scarce for the ones who consume tea in the mornings. But in addition to abovementioned shortcomings at the appliances in the market, any convenient later use thereof is also an unfulfilled need of tea consumers who would prefer to prepare the appliance at an earlier time, set it to a later time to start extraction process for consume the extraction product at a convenient time without wasting minutes waiting the tea to be ready to consume. Also, the tea brewing machines in the market which aim to prevent over-brewing, are complex with movable parts such as motors and elevators; and a basic, compact and easy-to-use tea brewing appliance wherein the over-brewing is prevented is still an unfulfilled need of the market.

### Objects of the Invention

Primary object of the present invention is to overcome the abovementioned shortcomings of the prior art.

Another object of the present invention is to provide a tea brewing appliance wherein desorption and loss of flavor substances from the extract is minimized, for obtaining extract with high flavor.

Another object of the present invention is to provide a tea brewing appliance which is suitable for obtaining an extract which mainly contains desired substances which are in desired concentrations, and said extract has minimized undesired substance concentrations.

Yet another object of the present invention is to provide a tea brewing appliance which is settable for operation in a time desired by a user, which time is later than the preparation of the appliance by providing liquid and leaves into it.

Another object of the present invention is to provide a tea brewing appliance which is compact, basic, and easy to use.

### Summary of the Invention

An electrically heated automatic compact tea brewing appliance comprising a liquid receptacle having a top opening, a bottom, and a minimum liquid loading level defined with a minimum distance from the bottom; a leaf receptacle having a first opening for receiving leaves and liquids, a second opening provided with a filter for supporting leaves and letting liquids through, which remains on the distal end of the leaf receptacle with regard to the first opening, a lid for covering the first opening, and a first circumferential wall circumferentially encompassing said filter; an extract channel having an extract inlet for receiving extract from the second opening; an extract outlet which remains on the distal end of the extract channel with regard to the first opening; and a second circumferential wall defining a path for extract flow through the extract channel; and a fluid circulating line provided with a pump and a pipeline in connection with a pipe exit, for transferring liquid from the bottom of the liquid receptacle and pouring it over the leaf receptacle through the pipe exit; wherein the first and second circumferential walls are impermeable for liquids and gases; the lid is sealable to the first opening such that, in use, a first volume is defined between said filter, first circumferential wall and lid, wherein gas transfer from said first volume through the top opening is prevented; and in use, the extract outlet remains within said minimum distance from the bottom such that the extract outlet remains submerged in liquid and gas transfer through the extract outlet is prevented.

### Brief Description of the Figures

The figures whose brief explanations are herewith provided are solely intended for providing a better understanding of the present invention and are as such not intended to define the scope of protection or the context in which said scope is to be interpreted in the absence of the description.
Figure 1 is a schematic cross-section view showing the parts and manner of mounting of an embodiment of a tea brewing appliance according to the present invention.
Figure 2 schematically shows the embodiment shown in Figure 1, wherein the appliance is mounted and in use.
Figure 3 is a schematic cross-section view of another embodiment according to the present invention, wherein the alignment of the lid, pipe exit and distributor plate is demonstrated.
Figure 4 is a cross-section partial view of another embodiment of the tea brewing appliance according to the present invention, wherein the positioning of a distributor plate above leaves is demonstrated.
Figure 5 (a) shows a perspective view of a distributor plate for use in a tea brewing appliance according to the present invention, and (b) a schematic cross-section view demonstrating the positioning of said distributor plate onto leaves.
Figure 6 is a schematic cross-section view showing the liquid receptacle, body, and the manner of mounting said body into said liquid receptacle, in another embodiment of the tea brewing appliance according to the present invention.
Figure 7 is a schematic cross-section view demonstrating another embodiment of the tea brewing appliance according to the present invention, wherein the lid is in open position for preparation of said appliance to operation.
Figure 8 is a schematic cross-section view demonstrating the embodiment shown in

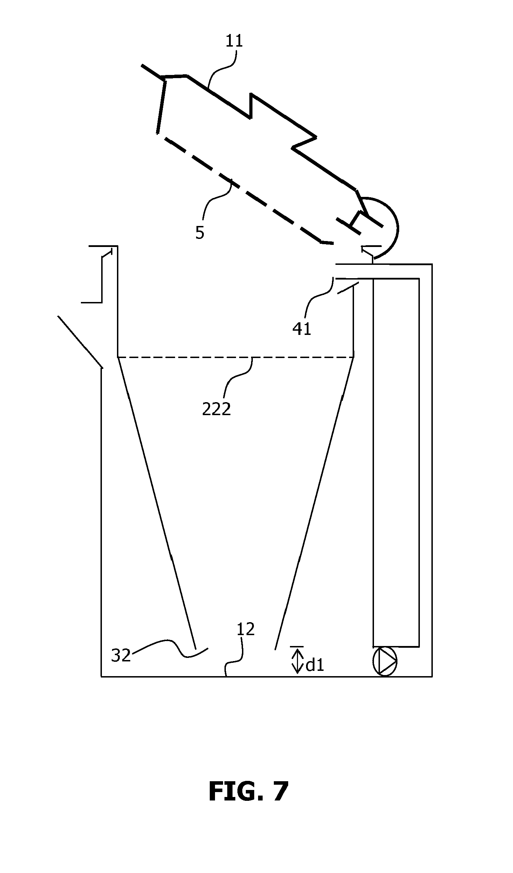

Figure 7, wherein the appliance is provided with liquid and leaves, and the lid is closed such that the pipe exit and the distributor plate are aligned.

### Detailed Description of the Invention

Referring now to the figures outlined above, the present invention proposes an electrically heated automatic compact tea brewing appliance providing minimized desorption of volatile aromatic substances from the extract. By minimizing said desorption, brewed tea with high concentrations of said aromatic substances can be obtained.

Desorption here is a phenomenon whereby a volatile substance is released from a liquid phase such as tea extract, to a gas phase in contact with said liquid phase through a contact surface between both phases. The desorption rate of a volatile substance from the liquid phase to the gas phase is lower with higher concentrations of said substance in the gas phase. When the gas phase is saturated with said substance, observable desorption rate of said substance is practically zero.

For minimizing desorption of volatile substances from the brewed tea, and thus obtainment of an extract with high flavor, several conditions should be fulfilled, most important ones of which are as follows:
- A high concentration of volatile substances in the gas phase within the tea brewing appliance should be obtained. Said concentration is preferably respective saturation concentrations in the gas phase, and more preferably the gas phase is oversaturated by said substances. To this end, preventing or minimizing the escape of the gas phase containing such substances from the tea brewing appliance is of great importance. The tea brewing appliance according to the present invention obtains this by providing a high ratio of gas phase volume isolated from the openings of the appliance isolated from the openings, in comparison with the gas phase volume open to mass transfer through any gas escape sites of said appliance such as a tea pouring opening (13).
- Contact surface between the gas and liquid phases should be kept small, especially if the escape of gas phase containing volatile substances from the tea brewing appliance is inevitable. To this end, flight distances of any extract drops falling within the appliance should be kept small, thicknesses of any flowing extract films within the appliance should be kept high with respect to surface areas of said films; and liquid extract phase surface should preferably be kept still, e.g. by keeping under its boiling temperature.

In the light of the abovementioned conditions, briefly, the electrically heated automatic compact tea brewing appliance according to the present invention comprises:
- a liquid receptacle (1) having a top opening (10), a bottom (12), and a minimum liquid loading level defined with a minimum distance (d) from the bottom (12);
- a leaf receptacle (2) having a first opening (21) for receiving leaves and liquids; a second opening (22) provided with a filter (222) for supporting leaves and letting liquids through, which remains on the distal end of the leaf receptacle with regard to the first opening (21), a lid (11) for covering the first opening (21), and a first circumferential wall (23) circumferentially encompassing said filter (222);
- an extract channel (3) having an extract inlet (31) for receiving extract from the second opening (22); an extract outlet (32) which remains on the distal end of the extract channel (3) with regard to the first opening (31); and a second circumferential wall (33) defining a path for extract flow through the extract channel;
- and a fluid circulating line (4) provided with a pump and a pipeline (40) in connection with a pipe exit (41), for transferring liquid from the bottom (12) of the liquid receptacle (1) and pouring it over the leaf receptacle (2) through the pipe exit (41);
wherein
- the first and second circumferential walls (23, 33) are impermeable for liquids and gases,
- the lid (11) is sealable to the first opening (21) such that, in use, a first volume (v1) is defined between said filter (222), first circumferential wall (23) and lid (11), wherein gas transfer from said first volume (v1) through the first opening (21) is prevented,
- in use, the extract outlet (32) remains within said minimum distance (d) from the bottom (12) such that the extract outlet (32) remains submerged in liquid phase in the liquid receptacle (1), thus gas transfer through the extract outlet (32) is prevented.

The parts in proximity of the heating equipment (1000) of such brewing appliances may reach high temperatures in absence of liquids inside the liquid receptacles, and said absence may result in fire. For this reason, a minimum liquid loading level is a must for such devices. The tea brewing appliance according to the present invention comprises a minimum liquid loading level. Said level is indicated on the appliance, with an indication mark located at a certain distance from the bottom of its liquid receptacle. Said level and respective distance (d) is utilized in the present invention, for preventing aroma loss from the gas and liquid phases within a volumetric part of the appliance. Thus, protection of concentration level of aromatic substances (flavor; volatile compounds) within the extract for strong flavor is achieved.

The tea brewing appliance according to the present invention further comprises a leaf receptacle (2) having a first opening (21) for receiving leaves and liquids; a second opening (22) provided with a filter (222) for supporting leaves and letting liquids through, which remains on the distal end of the leaf receptacle with regard to the first opening (21), a lid (11) for covering the first opening (21), and a first circumferential wall (23) circumferentially encompassing said filter (222). In contrary with conventional leaf filters/baskets for tea brewing appliances of prior art, said leaf receptacle (2) is designed to keep any gaseous matter within certain radial limits, which are defined by the first circumferential wall (23) which is impermeable. In use, fluids in the appliance, i.e. a gas phase and mainly liquid extract, can be transferred through the filter (222), towards an extract channel (3).

The extract channel (3) comprises an extract inlet (31), an extract outlet (32) and a second circumferential wall (33). In use, the extract inlet (31) receives liquid extract flowing through the filter (222) of the second opening (22); and said extract continues flowing along the extract channel (3) towards the extract outlet (32). In use, the extract outlet (32) remains within the minimum liquid level which is defined by a minimum distance (d) from the bottom (12) of the liquid receptacle (1). Said minimum distance (d) can be determined as the distance of the fluid surface from the bottom (12) for brewing one portion of tea. Said portion may be e.g. about 200 milliliters.

The second circumferential wall (33) is also impermeable for both liquids and gases, thus in use, neither gaseous matter nor liquid extract escapes from a second volume (v2) defined by the second circumferential wall (23), the filter (222) and a liquid level (h) in the liquid receptacle (1) volume in horizontal direction (x) which is mainly parallel to the liquid surface put into the liquid receptacle (1). Hence, in use, gas transfer through the extract outlet (32) is prevented, since the gas phase containing higher concentrations of flavor substances (or aromatic substances), is trapped within said second volume (v2). Said liquid level is at a greater distance from the bottom (12) in comparison with the extract outlet (32). Practically, aromatic substances cannot escape from the second volume (v2), and aromatic substance concentrations in the respective gas phase are maintained high. This results in minimized desorption of aromatic substances from the liquid extract to the gas phase, and an extract with high flavor is obtained.

The leaf receptacle (2) and the extract channel (3) can be either removably connectable, or they may be an integral body.

As a matter of course, the leaf receptacle (2) is also suitable for receiving one or more tea bag(s), such that leaves can be provided into the leaf receptacle (2) in tea bags.

The tea brewing appliance according to the present invention comprises a fluid circulating line (4) provided with a pump and a pipeline (40) in connection with a pipe exit (41). In use, liquid matter (W) is transferred from the bottom (12) of the liquid receptacle (1) and poured over the leaf receptacle (2) through the pipe exit (41). To this end, in use, the pipe exit (41) is located at least slightly in a greater distance than the leaves (T) in accordance with the base (12); thus the liquid coming from the liquid receptacle (1) can be poured onto the leaves for extraction of soluble matter from the leaves.

Preferably, in use, the liquid is circulated in a pre-determined temperature and for a pre-determined period in accordance with leaf type and user preference, such that the extraction is stopped in a user-preferred extraction level for said leaf type and user preference. Thus, the extract mainly contains desired substances which are in desired concentrations, and said extract has minimized undesired substance concentrations.

The lid (11) is sealable to the first opening (21) such that, in use, gas transfer from said first volume (v1) through the first opening (21) is prevented. Thus, whilst brewing, the mass transfer around the first volume (v1) is basically limited to liquid entrance to the leaf receptacle (2) from the pipe exit (41), and an outflow of liquid extract through the filter (222) and the extract inlet (31) towards the extract channel (3).

In use, the ratio of the sum of the first and second volumes (v1+v2) where gas phases are trapped, to the total inner gas volume within the liquid receptacle (1) is aimed to be kept high according to the present invention. At a brewing appliance where the liquid receptacle (1), leaf receptacle (2) and extract channel (3), are mainly cylindrical, said ratio can be considered approximate to the ratio of the sum of the inner volumes of the leaf receptacle (2) and the extract channel (3), to the inner volume of the liquid receptacle (1). To this end, the sum of the inner volume of the leaf receptacle (2) and the inner volume of the extract channel (3) is preferably a greatest possible part of the total inner volume of the liquid receptacle (1). Said sum is preferably at least 50%, more preferably at least 75%, and even more preferably at least 85% of the inner volume of the liquid receptacle (1).

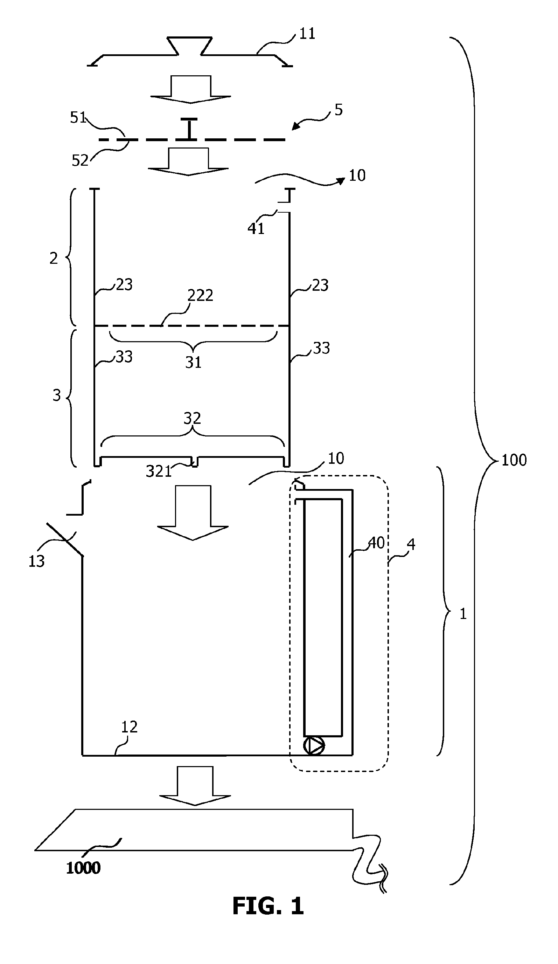

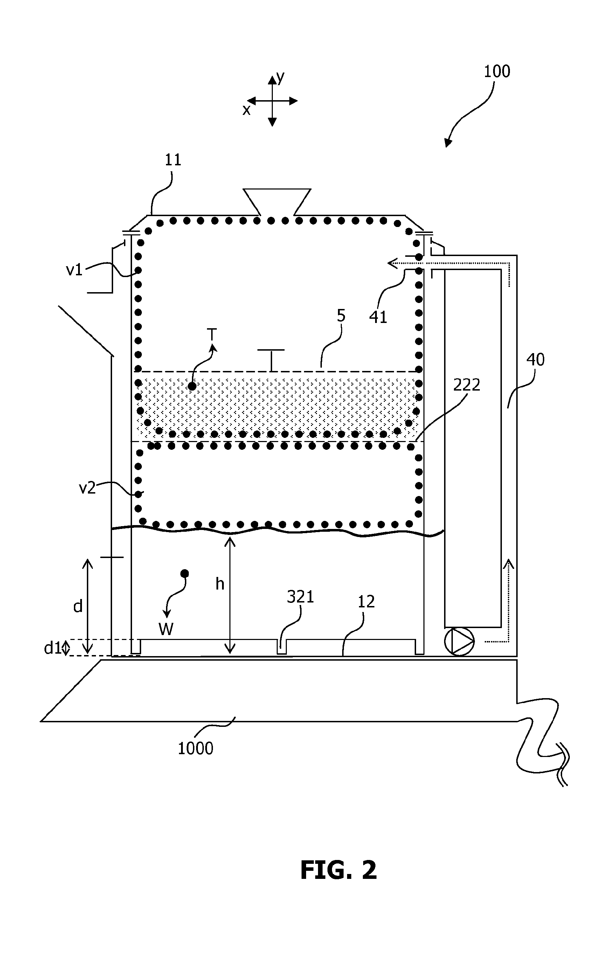

The extract outlet (32) can be provided with one or more leg (321) as schematically shown in Figures 1 to 6 such that, in use, the extract channel (3) is supported by the bottom (12). In this embodiment according to the present invention, the leg(s) (321) allow the passage of liquid extract from the extract channel (3) thus the pressure inside the extract channel remains in its atmospheric value, and brewed tea can be freely spilled out of the liquid receptacle whilst serving tea.

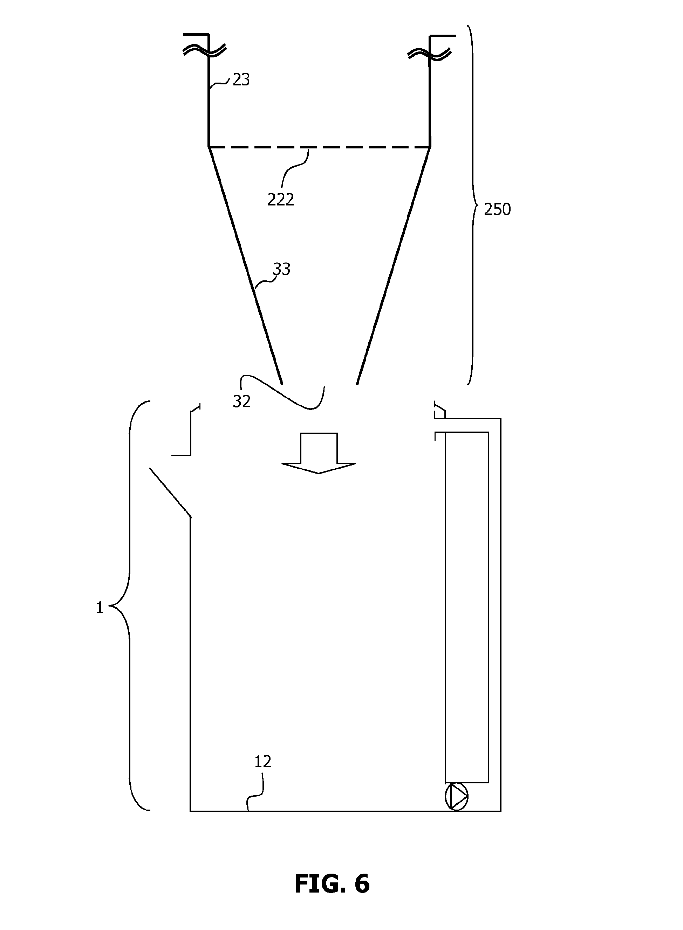

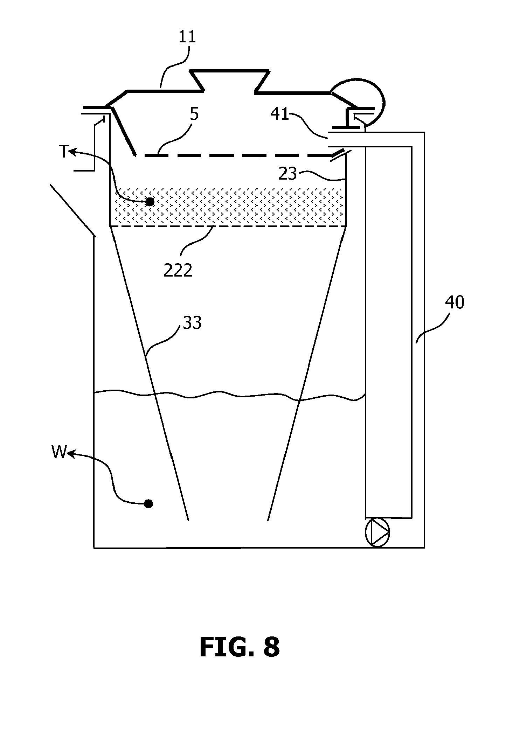

In another embodiment according to the present invention schematically shown in Figures 6 to 8, the leaf receptacle (2) and the extract channel (3) constitute a body (250) which is supportable by hanging into the liquid receptacle without contacting the extract outlet (32) to the bottom (12).

In the tea brewing appliance according to the present invention, the distance (d1) between the extract outlet (32) and the bottom (12) is preferably less than 25 mm. Taking into account that liquid receptacle of a typical tea brewing appliance is approximately cylindrical with e.g. disc shaped cross-section of around 15 cm diameter, and that a common cup for tea has a volume of approximately 200 cm³; a single portion of tea (i.e. liquid extract) occupies a mainly cylindrical volume having a height of approximately 35 mm within the liquid receptacle. The minimum liquid loading level thus the minimum distance (d) should be designated to be not much lower than about 35 mm for such appliance. Therefore, if the distance (d1) between the extract outlet (32) and the bottom (12) is chosen to be less than 25 mm, the extract outlet (32) remains within said minimum distance (d) from the bottom whilst brewing. Thus, in use, gas transfer through the extract outlet (32) is prevented and the aroma loss from the liquid extract is minimized.

When a small portion of brewed tea is taken out from a liquid receptacle of a tea brewing appliance, also the rest of the tea is desired to maintain its flavor. In a more preferred embodiment according to the present invention, in use, the distance between the extract outlet (32) and the bottom (12) is less than 5 mm. This embodiment allows the remaining tea in the liquid receptacle maintain flavorful, even if said remaining tea portion is only 1/5 of a typical cup of tea.

The tea brewing device according to the present invention preferably further comprises a distributor plate (5) having a first surface (51) facing the lid (11); a second surface (52) parallel to the first surface, facing the filter (22); and a plurality of openings (53) throughout the distributor plate (5) for, in use, allowing passage of fluid coming from the pipe exit (41) through the distributor, and evenly distribution of the fluid onto the leaf receptacle. At this embodiment, any occasion of channeling through the leaves is eliminated, and an effective extraction of soluble substances is achieved.

Said distributor plate (5) preferably comprises a perforated plate. In this case, a side of such perforated plate is the first surface (51), the alternate side thereof is the second surface (52), and the perforations are the openings (53).

The pipe exit (41) preferably has an axis parallel to the first surface (51) such that, in use, fluid coming from the pipe exit (41) is provided onto the distributor plate (5) in a direction tangential to the first surface (51). This allows a smooth arrival of liquid onto the distributor plate (5), and eliminates any occurrence of splattering which increases desorption of aroma substances by increasing the interface area between liquid and gas.

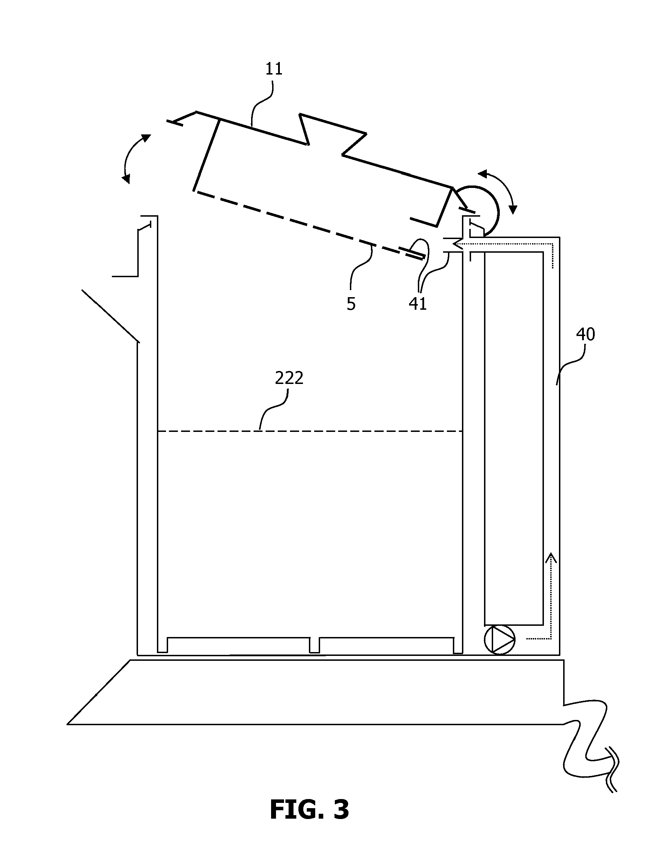

In a preferred embodiment according to the present invention, the lid (11) is rotatably connected to the liquid receptacle (1), the distributor plate (5) is provided on the lid (11) and when the lid (11) is closed, the pipe exit (41) remains between said lid (11) and distributor plate (5). In this embodiment, which is schematically shown in Fig 3, the lid (11) can be kept closed onto the liquid receptacle (1) even when the leaf receptacle (2) is apart from the liquid receptacle (1). Furthermore, at preparing the tea brewing appliance, the positioning of the

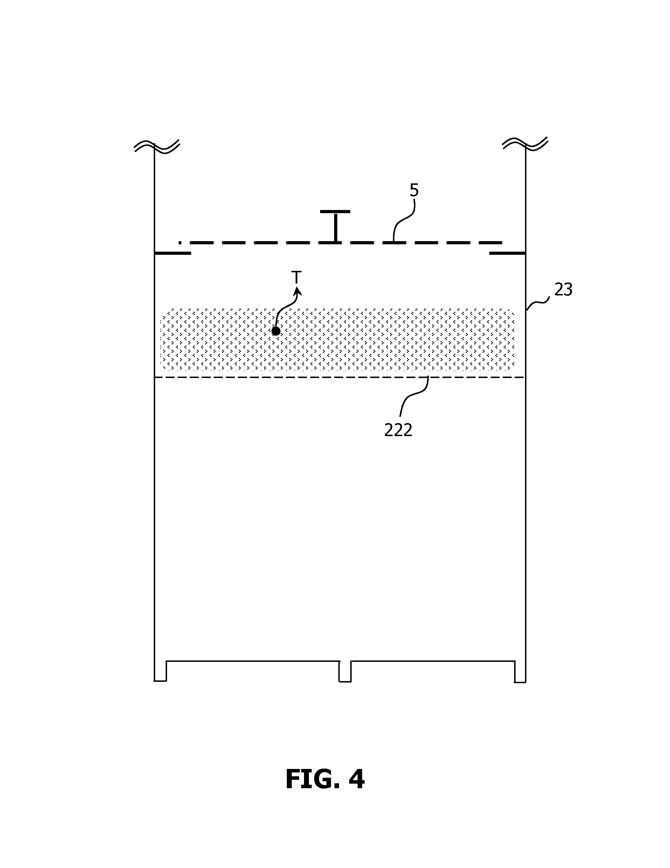

In another embodiment according to the present invention, which is schematically shown in Fig. 4, the leaf receptacle (2) comprises support means (24) for supporting the distributor plate (5).

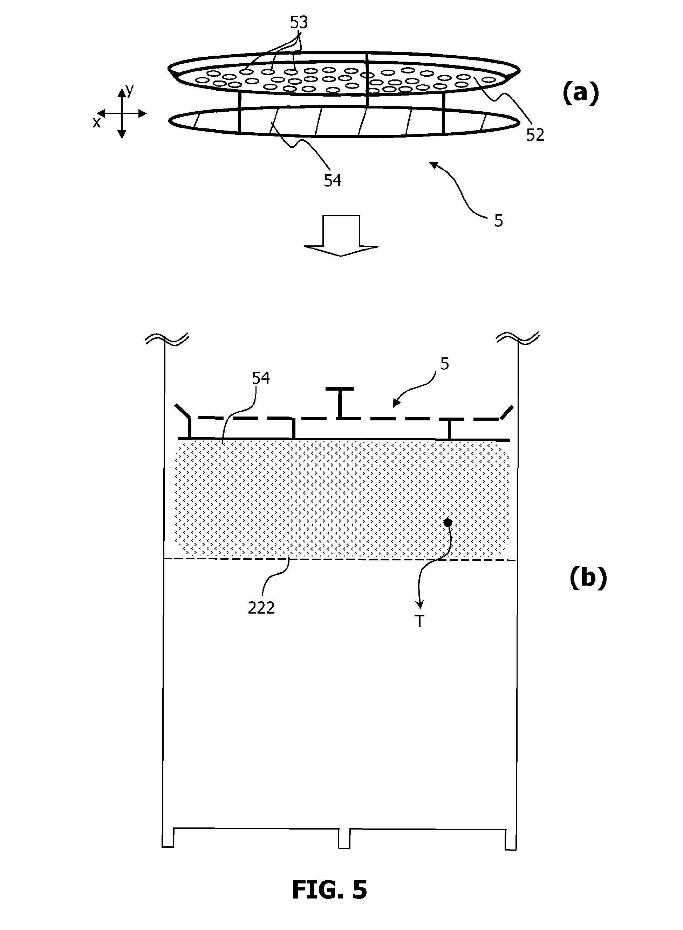

In a more preferred embodiment according to the present invention, which is schematically shown in Fig. 5, said distributor plate (5) is connected to a mesh (54) which is parallel to said distributor plate (5). In use, a distant placing of the distributor plate (5) onto leaves in the leaf receptacle (2) is provided with this embodiment. Thus following advantages are achieved:
- Flattening of the top of leaves, thus obtaining an even top to be poured over by liquid
- As a result, obtaining an even depth of leaves throughout the leaf receptacle
- Also at the beginning of a brewing process, uneven admittance of liquid by dry leaves is avoided, since the second surface (52) of the distributor plate (5) is not in direct contact with dry leaves when the distributor plate (5) and its second surface (52) is first wetted.

The minimum distance between the distributor plate (5) and the mesh (54) is preferably within the range of 2 mm and 10 mm. The minimum value within this range is short enough to let liquid drops falling from the openings (53) onto the leaves in y-direction without interruption causing uneven extraction; since the main component in the liquid in a tea brewing device is water, and water droplets forming around said openings (53) are expected to have diameters of approximately 1 mm or smaller, which is smaller than the lower limit of said range.

The pipeline (40) preferably passes through a handle of the liquid receptacle (1) for convenient design. The tea brewing appliance according to the present invention is preferably an electrically powered. Further preferably, said appliance is digitally programmable according to several regimes for tea brewing; such as a minimum temperature for starting fluid circulation and extraction process, duration and number of any extraction cycles, flow rate of circulated fluid at any extraction cycle, etc.

In the tea brewing appliance according to the present invention, the leaves (T) are maintained apart from the liquid (W) in the liquid receptacle (1) except during spilling of the circulated liquid onto the leaves; thus over-brewing is prevented without necessitating any movable part such as an elevator in the appliance. As a result, over-brewing is prevented with a very basic, simple concept and respective appliance according to the present invention.

Connection between the pipeline (40) and the pipe exit (40) is preferably sealed in use, such that when the appliance is mounted, leakage of liquid extract into the liquid receptacle (1) instead of upon the leaf receptacle (2) or onto a distribution plate (5) on/above said leaf receptacle, is prevented.

Likewise, contact surfaces between the liquid receptacle (1) and the leaf receptacle (2) is hermetically sealed in use, such that leakage of the gas phase inside the liquid receptacle (1) through said contact surfaces is prevented. Also the pouring opening is preferably coverable e.g. with a hinged closure (not shown) means for minimizing diffusion of flavor out of the appliance whilst and upon brewing.

A preferred mode of use of the appliance according to the present invention can be proposed as following sequence:
- The liquid receptacle (1) is provided with a liquid (W) (e.g. water) prior to or upon placing the body (250) comprising the leaf receptacle (2) and the extract channel (3),
- Leaves (T) are placed into the leaf receptacle (2), onto the filter (222);
- A distributing plate (5) is placed onto/above the leaves;
- The lid (11) is closed; if the lid (11) is provided with a distribution plate (5), the previous step is performed simultaneous with this step;
- The appliance is placed onto respective heating equipment (1000), and the heating equipment (1000) is turned on.

A preferred embodiment according to the present invention, the tea brewing appliance (100) according to the present invention preferably comprises a real-time circuitry (RTC) unit on a printed circuit board (PCB), which is preferably provided on the heating equipment (1000); such that a user can set a desired time for operating the tea brewing appliance (100) later than preparing it by providing liquid (W) and leaves (T) into it, and mounting/aligning it to the heating equipment. This embodiment is such that a user can set a time for starting an automatic operation of the appliance at a later time set by user, and further preferably also such that one or more preset program can be run by the appliance for obtaining predetermined physicochemical properties of an extract prepared by the appliance. Said physicochemical properties may include expected maximum and minimum concentration levels of several substances such as the compounds known for affecting the extract in a pleasant or unpleasant way when the extract is consumed. Being sufficiently brewed (i.e. not over-brewed), being weak, or strong can be given as examples for said physicochemical properties, in a wording used by a regular consumer. Also a selection of several brewing programs adjusted for any kind of tea (e.g. black tea, or certain kinds of 'herbal' teas) can be selected by the user, for automatic operation of the appliance accordingly, and obtaining an extract with certain physicochemical properties expected from the kind of tea selected by the user.

The extraction process is preferably in accordance with following sequence:
- Upon the heating equipment (1000) is turned on, the liquid (W) in the liquid receptacle (1) is heated into a certain temperature suitable for a selected/predetermined tea brewing type;
- Upon reaching said temperature, the heating is arranged such that the temperature value is maintained;
- Liquid circulation starts by automatically turning on the pump, and the liquid (W) flows through the pipeline towards the pipe exit (41); and the liquid (W) is automatically spilled out of the pipe exit (41) directly onto the leaves (T) or preferably onto a distributor plate (5) for evenly distribution onto the leaves (T);
- Extraction occurs whilst the liquid flows through the leaves (T), the extract percolates through the filter (222) and follows the extract channel (3) towards the liquid receptacle (1);
- Extraction is continued by continuously or intermittently running the pump; preferably until reaching a selected or predetermined flavor concentration in the extract; thus discontinuation of the extraction at a certain/predetermined concentration of any undesired substances in the extract, and extract which mainly contains desired substances in desired concentrations is obtained,
- The temperature is preferably maintained during a selected or predetermined time.

Thus a tea brewing appliance (100) is provided, wherein the following objects are achieved:
- the abovementioned shortcomings of the prior art are overcome,
- desorption and loss of flavor substances from the extract is minimized,
- said tea brewing appliance is suitable for obtaining extract with high flavor,
- said tea brewing appliance is suitable for obtaining an extract which mainly contains desired substances which are in desired concentrations, and said extract has minimized undesired substance concentrations,
- said tea brewing appliance is settable for operation in a time desired by a user, which time is later than the preparation of the appliance by providing liquid and leaves into it,
- said tea brewing appliance is compact, basic, and easy to use.

## Claims

1. An electrically heated automatic compact tea brewing appliance (100) comprising:
- a liquid receptacle (1) having a top opening (10), a bottom (12), and a minimum liquid loading level defined with a minimum distance (d) from the bottom (12);
- a leaf receptacle (2) having a first opening (21) for receiving leaves and liquids; a second opening (22) provided with a filter (222) for supporting leaves and letting liquids through, which remains on the distal end of the leaf receptacle with regard to the first opening (21), a lid (11) for covering the first opening (22), and a first circumferential wall (23) circumferentially encompassing said filter (222);
- an extract channel (3) having an extract inlet (31) for receiving extract from the second opening (22); an extract outlet (32) which remains on the distal end of the extract channel with regard to the first opening (31); and a second circumferential wall (33) defining a path for extract flow through the extract channel;
- and a fluid circulating line (4) provided with a pump and a pipeline (40) in connection with a pipe exit (41), for transferring liquid from the bottom (12) of the liquid receptacle (1) and pouring it over the leaf receptacle (2) through the pipe exit (41);
**characterized in that**
- the first and second circumferential walls (23, 33) are impermeable for liquids and gases,
- the lid (11) is sealable to the first opening (21) such that, in use, a first volume (v1) is defined between said filter (222), first circumferential wall (23) and lid (11), wherein gas transfer from said first volume (v1) through the top opening (10) is prevented,
- and in use, the extract outlet (32) remains within said minimum distance from the bottom (12) such that the extract outlet (32) remains submerged in liquid and gas transfer through the extract outlet (32) is prevented.

2. A tea brewing appliance according to the Claim 1, wherein the distance between the extract outlet (32) and the bottom (12) is less than 25 mm.

3. A tea brewing appliance according to the Claim 2, wherein, in use, the distance between the extract outlet (32) and the bottom (12) is less than 5 mm.

4. A tea brewing appliance according to the Claim 1, wherein said tea brewing device further comprises a distributor plate (5) having a first surface (51) facing the lid (11); a second surface (52) parallel to the first surface, facing the filter (22); and a plurality of openings (53) throughout the distributor plate (5) for, in use, allowing passage of fluid coming from the pipe exit (41) through the distributor, and evenly distribution of the fluid onto the leaf receptacle.

5. A tea brewing appliance according to the Claim 4, wherein said distributor plate (5) is connected to a mesh which is parallel to said distributor plate (5), providing, in use, a distant placing of the distributor plate (5) onto leaves in the leaf receptacle (2).

6. A tea brewing appliance according to the Claim 5, wherein the distance between the distributor plate (5) and the mesh is within the range of 2 mm and 10 mm.

7. A tea brewing appliance according to the Claim 4, wherein said distributor plate (5) comprises a perforated plate.

8. A tea brewing appliance according to the Claim 4, wherein the pipe exit (41) has an axis parallel to the first surface (51) such that, in use, fluid coming from the pipe exit (41) is provided onto the distributor plate (5) in a direction tangential to the first surface (51).

9. A tea brewing appliance according to the Claim 4, wherein the lid (11) is rotatably connected to the liquid receptacle (1), the distributor plate (5) is provided on the lid (11) and when the lid (11) is closed, the pipe exit (41) remains between said lid (11) and distributor plate (5).

10. A tea brewing appliance according to the Claim 4, wherein the leaf receptacle (2) comprises support means (24) for supporting the distributor plate (5).

11. A tea brewing appliance according to the Claim 1, wherein said leaf receptacle (2) and extract channel (3) are separable.

12. A tea brewing appliance according to the Claim 1, wherein the sum of the inner volume of the leaf receptacle (2) and the inner volume of the extract channel (3) at least 50% of the inner volume of the liquid receptacle (1).

13. A tea brewing appliance according to the Claim 1, wherein the extract outlet (32) is provided with one or more leg (321) such that, in use, the extract channel (3) is supported by the bottom (12).

14. A tea brewing appliance according to the Claim 1, wherein the leaf receptacle (2) and the extract channel (3) constitute a body (250) which is supportable by hanging into the liquid receptacle without contacting the extract outlet (32) to the bottom (12).

15. A tea brewing appliance according to the Claim 1, wherein said tea brewing appliance comprises a real-time circuitry (RTC) unit on a printed circuit board (PCB), such that a user can set a time for starting an automatic operation of the appliance at a later time set by user, and such that one or more preset program can be run by the appliance for obtaining predetermined physicochemical properties of an extract prepared by the appliance.
